# EUROPEAN PATENT APPLICATION

(11) **EP 4 378 293 A1**
(43) Date of publication of application: **05.06.2024**
(21) Application number: 23208822.9
(22) Date of filing: 09.11.2023
(51) Int. Cl.: A01B 79/00, A01B 79/02

(54) **AUTOMATED CONTROL SYSTEM AND METHOD FOR OPERATING A MULTI-FUNCTIONAL EQUIPMENT, AND MULTI-FUNCTIONAL EQUIPMENT THEREOF**

(30) Priority: 29.11.2022 EP 22465570
(71) Applicant: Continental Autonomous Mobility Germany GmbH, 85057 Ingolstadt (DE)
(72) Inventor: Sluser, Ciprian, 300704 Timisoara (RO)
(74) Representative: Continental Corporation

(57) **Abstract**

The present invention is related to an automated control system, an automated control method for a multi-functional equipment, and multi-functional equipment thereof, designed for agricultural purposes.

The automated control system (100) according to invention comprises an automated driving control unit (110) configured to receive instructions to execute a task comprising one or more operations, and to activate or deactivate generic vehicular functions (EBA, CFA), and an implement control unit (120) configured to receive instructions to activate or deactivate specific assisting functions (TPA, PA, MA, SA, SPA, HA, CHA) that enable the received task execution. The automated driving control unit (110) sends instructions to and receives instructions from the implement control unit (120) to activates or deactivates one or another of the generic vehicular functions in direct dependency on one or another activated specific functions.

According to invention, there is provided also an automated control method (200) comprising: receiving, by the automated control system (100), an instruction to perform at least one operation assisted by a specific assisting function from a plurality of specific assisting functions; activating the specific assisting functions depending on the operation to be performed; activating or deactivating generic vehicular functions depending on the activated specific assisting function; activating or deactivating, by the automated control system (100), a plurality of actuators able to perform generic vehicular functions and specific functions, respectively; regularly checking the execution status of the operation until finishing the operation and notifying unusual events and the finishing of the operation.

Also, a multi-functional equipment (10) incorporating the automated control system and operating according to the automated control method is provided.

## Description

The present invention relates to an automated control system and method for operating a multi-functional equipment, and multi-functional equipment thereof, designed for agricultural purposes.

Overpopulation represents a threat to a sustainable agriculture, therefore a recent introduced paradigm called Agriculture 4.0 tends to integrate advanced technologies from Industry 4.0 to farming. Patent literature closely illustrates this trend by disclosing inventions concerning agricultural robots ("agrobots"). For example, WO2016116888A1 discloses an agricultural robot for monitoring plants in a growing site, based on data collected by a sensor module mounted onto an autonomous mobile platform. US2022219329A describes a method of coordinating semi-autonomous robots to perform agricultural tasks on a plurality of plants with minimal human intervention. A plurality of robots is deployed to perform a respective plurality of agricultural tasks, each agricultural task being associated with a respective plant, and each plant may have been previously designated as a target for one of the agricultural tasks. When a given robot has reached an individual plant associated with the respective agricultural task that was assigned to the given robot, a manual control interface is provided at output component(s) of a computing device in network communication with the given robot. The manual control interface is operable to manually control the given robot to perform the respective agricultural task. CN 216147097U discloses an intelligent agriculture large-area positioning type farmland pesticide spraying robot that comprises a track and a movable pesticide spraying device. A multi-functional agricultural robot is also described by EP3827654A1. The mentioned robot is configured to perform one or more in-season management tasks on an agricultural field while autonomously navigating between adjacent rows of planted crops, based at least in part on an increased data collection range of one or more aerial navigation sensors coupled to a mast extending generally upward, away from a surface of the agricultural field.

However, current solutions described by the patent literature leaves room for further equipment automatization, given the abundance of operations in agriculture, in various seasons or locations.

The technical problem to be solved is how to operate vehicular functions in direct accordance with a plurality of specific functions in a multi-functional equipment.

It is an object of the present invention to provide an automated control system, able to combine vehicular and specific functions, and an automated control method.

This object is solved by an automated control system with the features of claim 1 and a method with the features of claim 12.

The dependent claims include advantageous further developments and improvements of the present principles as described below.

According to an aspect of the invention, an automated control system is provided. The automated control system may comprise: an automated driving control unit configured to receive a task comprising one or more specific operations, the automated driving control unit being configured to activate or deactivate generic vehicular functions; and an implement control unit configured to activate or deactivate specific assisting functions that enable the task execution. The automated driving control unit is in bi-directional communication with the implement control unit and activates or deactivates one or another of the generic vehicular functions in accordance with on one or another activated specific assisting functions.

The concept divides a "central brain" (ADCU) from a "dedicated brain" (ICU), in such a manner that even in the case that ADCU, from various reasons, is not able to control the entrusted vehicular functions, and an operator is required to drive the host equipment, the specific functions are still able to be performed separately in an automated manner.

According to some embodiments, the generic vehicular functions may include electronic brake assist and corridor following assist, and the specific assisting functions may include tree planting assist, pruning assist, spraying assist, mowing assist, plowing assist, harvesting assist and crop health assist.

Further embodiments comprise that, when tree planting assist is activated, the electronic brake assist is activated, and the corridor following assist is deactivated. Similarly, when pruning assist is activated, the electronic brake assist is activated, and the corridor following assist is deactivated; when spraying assist is activated, the electronic brake assist is deactivated, and the corridor following assist is activated; when mowing assist is activated, the electronic brake assist is deactivated, and the corridor following assist is activated. Further on, some other embodiments provide that, when plowing assist is activated, the electronic brake assist is deactivated, and the corridor following assist is activated; when harvesting assist is activated, the electronic brake assist is activated, and the corridor following assist is deactivated. Moreover, when crop health assist is activated, the electronic brake assist is activated, and the corridor following assist is deactivated.

In a further embodiment of the present invention, the implement control unit may enable specific actuators according to the activated specific assisting functions.

Further aspects of the invention are described below. It will be apparent to those skilled in the art that the above features of embodiments of the automated control system may also be used in conjunction with the following aspects of the invention and vice versa.

According to another aspect of the invention, an automated control method is provided for operating a multi-function equipment by means of an automated control system. The automated control method may comprise: receiving, by the automated control system, an instruction to perform at least one operation assisted by a specific assisting function from a plurality of specific assisting functions; activating, depending on the operation to be performed, the specific assisting functions; activating or deactivating, depending on the activated specific assisting function, generic vehicular functions; activating or deactivating, by the automated control system, a plurality of actuators able to perform generic vehicular functions and specific assisting functions, respectively; generating operational commands corresponding on each assisted operation, and regularly checking the execution status of the operation until finishing the operation, and notifying unusual events and the finishing of the operation.

In an embodiment of the invention, the method further comprises acquiring data from a plurality of sensors; data may include sensor data, location information and operational data. In some embodiments of the automated method, the plurality of specific assisting functions may include tree planting assist, pruning assist, spraying assist, mowing assist, plowing assist, harvesting assist. In further embodiments, each assisting function may include a sequence of specific sub-operations.

Further features of the present invention will become apparent from the following description and the appended claims in conjunction with the figures.

### Figures

FIG. 1 is a block diagram illustrating a multi-functional equipment, according to an exemplary embodiment of the present invention.
FIG. 2 is a block diagram that describes an automated control system incorporated by the multi-functional equipment, according to another aspect of invention.
FIG. 3 is a flowchart that describes an automated control method for operating a multi-functional equipment, according to an aspect of the present invention.
FIG. 4 is a flowchart that describes a tree planting assist function, according to an embodiment of the present disclosure.
FIG. 5 is a flowchart that describes a pruning assist function, according to an embodiment of the present disclosure.
FIG. 6 is a flowchart that describes the spraying assist function, according to an embodiment of the present disclosure.
FIG. 7 is a flowchart that describes a mowing assist function, according to an embodiment of the present disclosure.
FIG. 8 is a flowchart that describes a plowing assist function, according to an embodiment of the present disclosure.
FIG. 9 is a flowchart that describes a harvesting assist function, according to an embodiment of the present disclosure.
FIG. 10 is a flowchart describing a crop health assist function, according to an embodiment of the present disclosure.

### Detailed description

For a better understanding of the principles of the present invention, embodiments of the invention will be explained in more detail below with reference to the figures. Like reference numerals are used in the figures for the same or equivalent elements and are not necessarily described again for each figure. It is to be understood that the invention is not limited to the illustrated embodiments and that the features described may also be combined or modified without departing from the scope of the invention as defined in the appended claims.

In the following description, the term "automated driving" means driving that automatically performs all of driving unit control, traction control, brake control, and steering angle control without any driver's operation. Thus, in the automated driving, an operating state of the driving unit, an operating state of a traction unit, an operating state of a brake mechanism, and the steering angle of the wheels are automatically determined. In the context of this invention, the term "function" should be understood as a sequence of instructions that a computer can interpret and execute to return a single, related action or result. The cumulated action or result assists an operator in maneuvering an equipment, hence the assisting function is described by the title, for example: tree pruning assist function (i.e., an automated procedure aimed to execute the pruning of a tree) or crop health assist function (i.e., an automated procedure aimed to detect the health status of a crop).

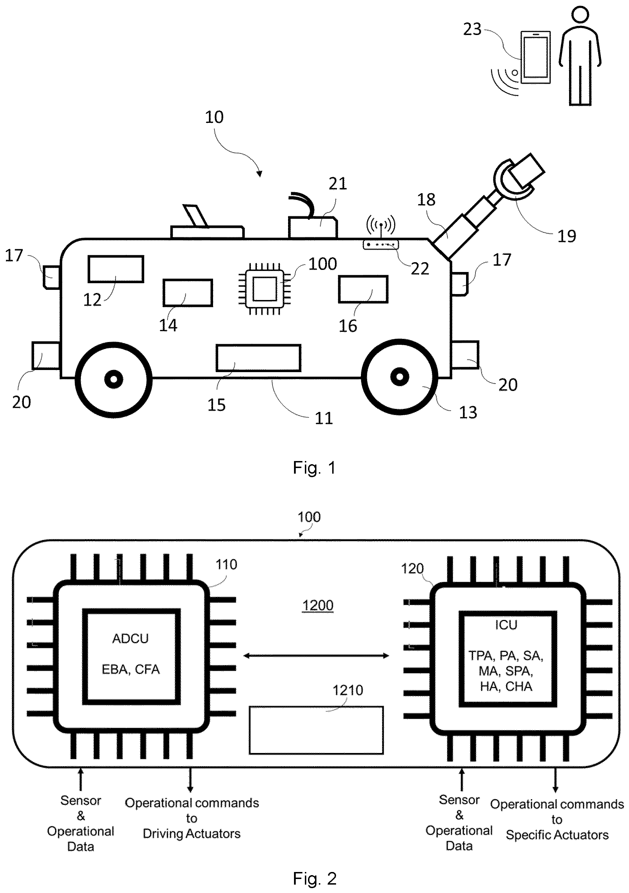

FIG. 1 is a block diagram that describes a multi-functional equipment 10, according to an exemplary embodiment of the present disclosure. A multi-function equipment 10 (hereinafter also referred to as the "host equipment 10") comprises a mobile platform 11 (a chassis) provided with a power source unit 12, a plurality of wheels 13 supporting the mobile platform 11, a traction control unit 14, a braking system 15, and a steering system 16. Traction control unit 14, braking system 15 and the steering system 16 are each operatively coupled to one or more of the wheels 13 and automatically monitored and controlled by an automated driving control unit 110. There is provided a plurality of sensors 17 to perceive the surroundings of the host equipment 10, including the type of status of soil. At least one arm carriage system 18 is mounted onto the mobile platform 11, to secure a plurality of inter-changeable specific actuators 19, including but not limited to a drill, a planting arm, a pruning arm, sprayer, a grass cutter, scissors, etc. Those actuators are stored into a tool compartment (not referenced or illustrated). Also, an implement hitch system 20 is mounted onto the mobile platform 11, to attach implements such as a snow plough or a harrow - not necessarily in a completely automated manner. The arm carriage system 18, as well as the implement hitch system 20 are controlled and operated according to specific functions implemented by means of an implement control unit 120, by means of computer-programs able to determine and adapt their respective orientation with respect to the soil or trees, for example. Both automated driving control unit 110 and implement control unit 120 are modules that cooperates in a bi-directional manner as components of an overall automated control system 100. The automated control system 100 may be configurated to generate operational commands responsive to tasks provided by an operator via a user interface 21. The operator may provide the tasks directly, or remotely - via wireless communication means 22, a user device 23 and a dedicated application 2310 running on user device 23.

The mobile platform 11 may be designed as a chassis able to provide safety, stability and mobility in various weather conditions and various soil types, considering not only the weight of various components (power source unit, arm carriage, implement hitch, arms and specific actuators), but also the weight of an operator on board. In some embodiments, the mobile platform 11 may be a rotatable one, having a turning table as a base (not illustrated), or a classic tractor chassis onto which the arm carriage 18 and the implement hitch 20 are mounted, as well as the mentioned components (not being limited to those already mentioned). A cabin for an operator may also be provided on top of the platform. In order to ensure stability, a suspension system (not illustrated) may be added. In addition, relative arrangement of the various sub-components and systems on the platform may vary, for example, frontal and/or rear arm carriage systems - not necessary symmetrically serving the same set of actuators in front or rear of the equipment. For sake of simplicity, Fig. 1 just illustrates the equipment with just one arm carriage system.

The power source unit 12 may include a generator coupled to an engine, a power storage, a current consumption estimating unit, a charge and discharge current setting unit, a generated current setting unit, and a generated current controller (not referenced and illustrated as such). An auxiliary power source (not referenced or illustrated) may be added to supply power only for specific operations, besides propulsion of the host equipment. Operational data concerning the power source unit 12 are collected by specific integrated sensors, such as current sensors or state-of-charging sensors and sent to the automated control unit 100, for further information and processing.

The plurality of wheels 13 may include tires designed for agricultural purposes - able to overcome hard weather conditions, different types of soil or terrain (rough, rocky, covered by grass or snow, muddy, etc.). In some preferred embodiments, the host equipment 10 may be provided with at least three wheels 13, all of them capable of being maneuvered independently.

Traction control unit 14, braking system 15, and steering system 16 are operatively coupled to one or more of the wheels 13, under the control of the automated driving control unit 110. In a preferred embodiment, the braking system is entirely electronic (i.e., brake-by-wire), as well the steering system (i.e., drive-by-wire).

The plurality of sensors 17 may include camera, radar, ultrasonic, position (GPS) sensors etc., capable to either detect objects (including, for example, a cluster of fruits, a leaf, a tree, a marking on a tree, a pattern on a leaf, a corridor delimited by a row of trees, an area covered with snow or grass, so on and so forth), or sensors able to detect environment data, such as air temperature, solar radiation, air pressure, ambient gas concentration (O₂, CO₂, NOₓ, etc.), rain/fog/moisture conditions, humidity, soil type (sand, rocky, muddy etc.). Data provided by this category of sensors are called in the herein description "sensor data". A special mention here: a map provided by a navigation system should also be understood as included in the "sensor data" as well. In addition, operational sensors are provided, for measuring various operational parameters for various vehicular components (for example, tire temperature and pressure, steering wheel(s) angle and torque, wheel speed, vertical, lateral or longitudinal acceleration, yaw angular rate, roll angular rate, vehicle tilt, vibration, liquid level, degree of load for a grass tank, current and state-of-charge of a power storage unit, etc.) - named in the herein description "operational data".

FIG. 2 is a block diagram that further describes the automated control system 100, according to a first aspect of the invention. The automated driving control unit 110 may activate electronic brake assist EBA and/or corridor following assist CFA.

Both the automated driving control unit ADCU 110 and the implement control unit ICU 120 are computer-controlled electronic circuits, each including at least one processor and a memory. The automated driving control unit 110 runs multiple driving assisting functions, while the implement control unit 120 runs specific agricultural assisting functions, both operating as computer programs stored in a non-volatile storage medium 1200 to control the multi-functional equipment 10. The non-volatile computer readable storage medium 1200 may include at least one memory 1210.

Functions of both the automated driving control unit 110 and implement control unit 120 are going to be detailed in the following description.

The driving functions associated to the automated driving control unit 110 are, in an exemplary embodiment, Electronic Brake Assist EBA and Corridor Following Assist (CFA), but not limited to these two examples. They are known and used on vehicles. Electronic Brake Assist EBA is derived from Emergency Brake Assist; basically, it means that, when an obstacle is detected, automated actions such as deceleration or stop are initiated, depending on the distance to the detected obstacle and speed of host equipment. Corridor Following Assist CFA is derived from Lane Cruising Assist, and means that when a corridor is detected, and the detected corridor is free, automated action such as moving at equal speed along the corridor is initiated by host equipment. In the herein description, such functions are named "generic vehicular functions" GVf, or more simply, "vehicular functions".

There are agricultural assisting functions controlled by the implement control unit 120. In the herein description, such functions are named "specific assisting functions" SAf, or more simply, "specific functions". Specific functions SAf include but are not limited to the following: tree planting assist TPA, pruning assist PA, spraying assist SA, mowing assist MA, plowing assist PWA, harvesting assist HA, crop health assist CHA.

Some embodiments refer to combinations of activated/deactivated generic vehicular functions in accordance with specific agricultural functions, as illustrated in Table 1.

**Table 1 - Concordance between vehicular and specific assisting functions**

| Active | Tree Planting | Pruning | Spraying | Mowing | Snow Plowing | Harvesting | Crop Health |
|---|---|---|---|---|---|---|---|
| Corridor Following | n | n | y | y | y | n | n |
| Electronic Brake | y | y | n | n | n | y | y |

The automated driving control unit 110 is configured to receive a predefined task from an operator via the user interface 21, which may be a human-machine interface, for example, provided with a display and a touch function. The predefined task may comprise several operations to be performed, each operation being identified by a code and stored in the memory of the automated control system 110. To be more exact, the implement control unit 120 is configured to activate or deactivate specific assisting functions SAf that enable the execution of the predefined task received at the automated driving control unit 110. The automated driving control unit 110 sends instructions to the implement control unit 120 to activate or deactivate a specific function. Based on the activated specific function, the automated driving control unit 110 activates or deactivates one or another of the generic vehicular functions GVf, according to the stored definitions of functions - namely, algorithms encoding specific steps - and based on operational data, sensor data and location information data.

For example, when an operator provides a task of "tree pruning", the associated assisting function is activated - tree pruning assist TPA, and it is initiated a sequence of operations to be performed by host equipment 10 under the control of the automated control system 100, "translated" in operational commands of activating or deactivating one or another from the mentioned generic vehicular functions in accordance with the currently activated tree pruning assisting function, namely electronic brake assist EBA is activated, and corridor following assist CFA is deactivated.

In a further embodiment, but in a similar manner, when pruning assist PA is activated, the electronic brake assist EBA is activated, and the corridor following assist CFA is deactivated. In a further embodiment, when spraying assist SA is activated, the electronic brake assist EBA is deactivated, and the corridor following assist CFA is activated. In a further embodiment, when mowing assist MA is activated, the electronic brake assist EBA is deactivated, and the corridor following assist CFA is activated. In another embodiment, when plowing assist PWA is activated, the electronic brake assist EBA is deactivated, and the corridor following assist CFA is activated. In another embodiment, when harvesting assist HA is activated, the electronic brake assist EBA is activated, and the corridor following assist CFA is deactivated. In yet another embodiment, when crop health assist CHA is activated, the electronic brake assist EBA is activated, and the corridor following assist CFA is deactivated.

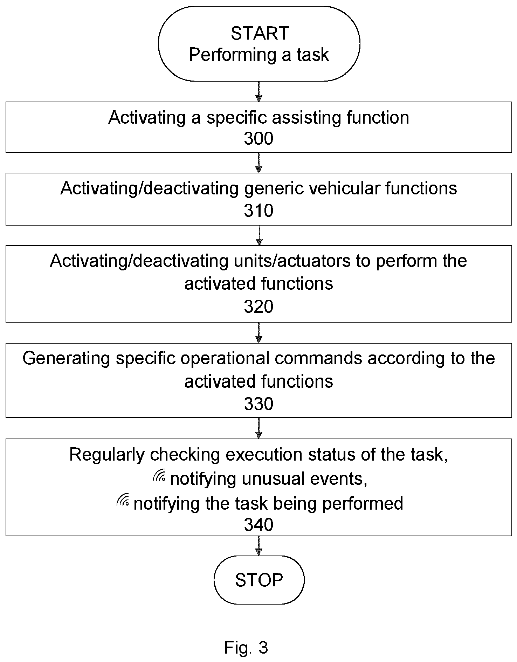

Fig. 3 is a flowchart that describes generically an automated control method for operating a multi-functional equipment 10, according to another aspect of the present invention.

When the automated control system receives instructions to perform a task assisted by a plurality of specific assisting functions, an automated control method is initiated, comprising steps 300-340:
300 activating, depending on the received task to be performed, a specific assisting function SAf (which is going to be detailed in the following description),
310 activating or deactivating generic vehicular functions, depending on the activated specific assisting function,
320 activating or deactivating, by the automated control system, a plurality of units or actuators able to perform generic vehicular functions or specific assisting functions, respectively,
330 generating specific operational commands according to the activated generic vehicular and specific functions, respectively,
340 regularly checking execution status of the task, notifying unusual events and notifying the task being performed.

Each assisting function comprises a sequence of specific sub-operations, which are going to be detailed in the following description. Definitions of both generic and specific assisting function, describing specific operations, operational commands, input and output data, etc. are stored and updated regularly.

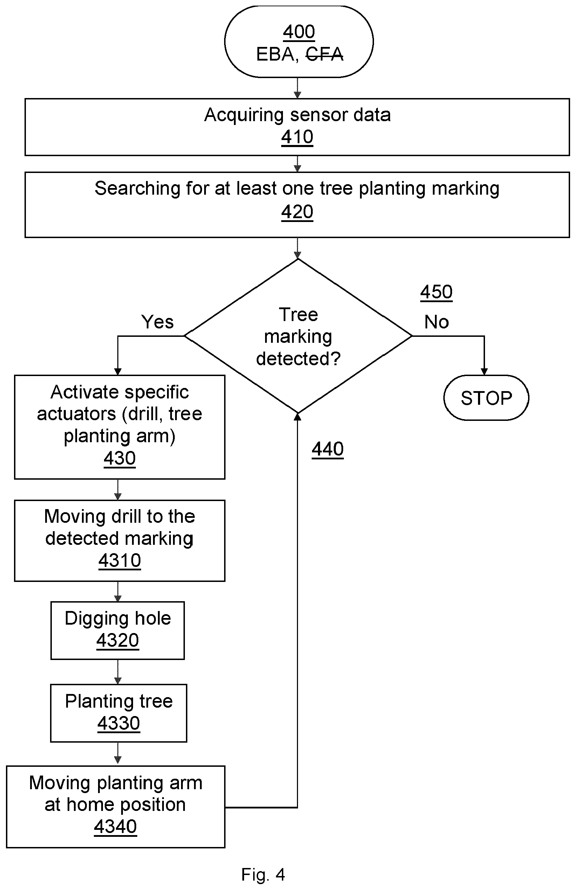

FIG. 4 is a flowchart that describes the tree planting assist function TPA, according to an embodiment of the present disclosure. The tree planting assisting function may include steps 400 to 450, namely:
400 deactivating corridor following assist and activating electronic brake assist,
410 acquiring sensor data, including data from camera, radar, ultrasonic and/or GPS sensors,
420 based on the acquired data, searching for at least one tree planting marking.

If one tree planting marking is detected, 430 proceeding to activate specific actuators, namely a drill and a planting arm, and further generating specific commands, namely:
4310 moving the drill to the detected marking,
4320 digging a hole,
4330 planting the tree in the hole by means of the planting arm,
4340 moving the planting arm in home position,
440 proceeding to search further for tree planting marking,
450 If no tree planting marking detected, stop.

For this specific embodiment, detecting the tree planting marking may be done by using a camera sensor and known image processing algorithm(s) able to detect markings in images acquired by the camera sensor; the marking position may be provided via GPS, and acquired/transmitted to the host equipment; radar or ultrasonic sensors may also detect the position of marking(s) on terrain.

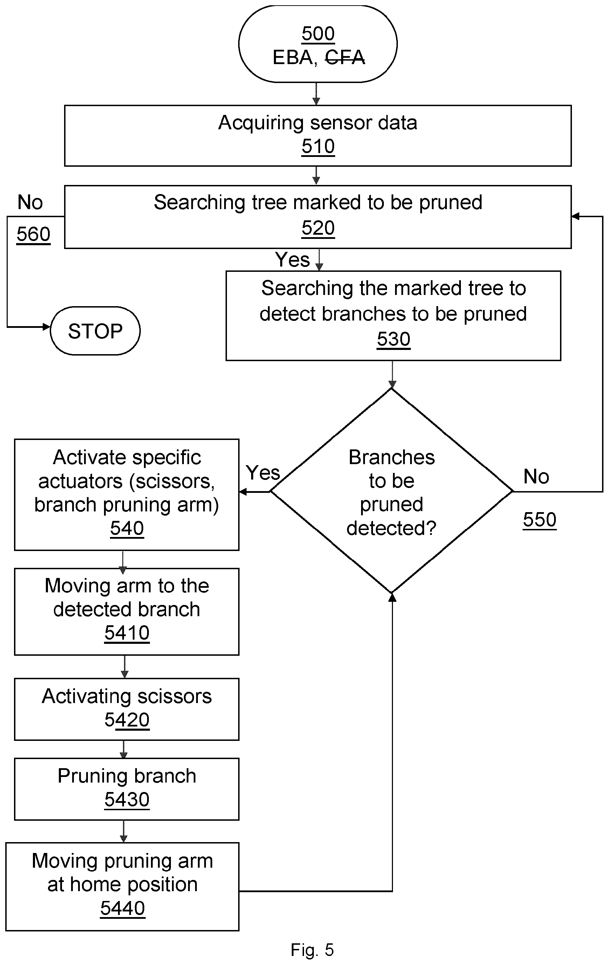

FIG. 5 is a flowchart that describes the pruning assist function, according to an embodiment of the present disclosure. The tree pruning assist may include steps 500 to 560, namely:
500 - deactivating corridor following assist and activating electronic brake assist,
510 - acquiring sensor data, including data from camera, radar, ultrasonic and/or GPS sensors,
520 - based on the acquired sensor data, searching for at least one tree marked to be pruned,
530 - searching the marked tree to detect branches to be pruned,
540 - if at least one branch to be pruned is detected, proceeding to activate specific actuators, namely a pruning arm and scissors, and further generating specific commands, namely:
   5410 moving the arm to the detected branch,
   5420 activating the scissors,
   5430 pruning the branch,
   5440 repeat until no branch to be pruned is detected anymore,
   5450 move the arm in home position,
   5460 proceeding to search further for marked trees.
560 If no branch is detected, stop.

Again, detecting the tree to be pruned may be done by using a camera sensor and known image processing algorithm(s) able to recognize a tree and branches of a tree in images acquired by the camera sensor; the tree position may be provided via GPS, and acquired/transmitted to the host equipment; radar or ultrasonic sensors may also detect the position of the tree on terrain. Image-based tree pruning algorithms may be implemented along the tree pruning assist function at the implement control unit, for example to recognize location, diameter, length and orientation of a tree branch, and, according to these data, to run rules and conditions such as "out of two close tree branches, prune the one with a smaller diameter" or "out of two close tree branches, prune the one that come across the other", so on and so forth.

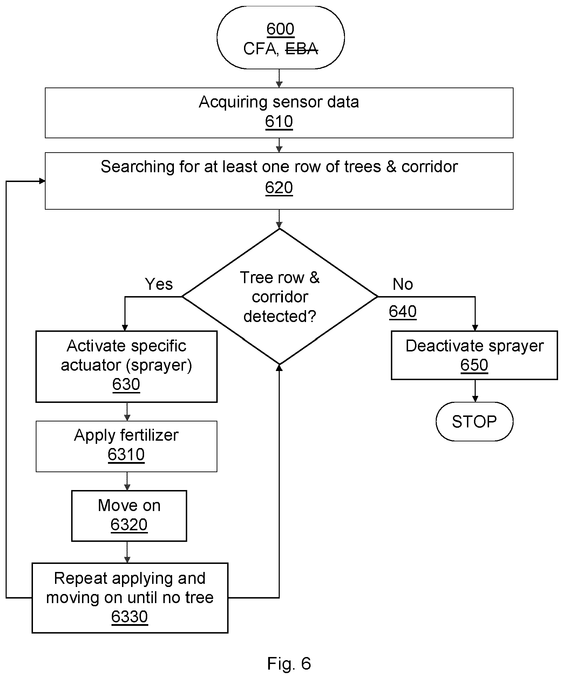

FIG. 6 is a flowchart that describes the spraying assist function, according to an embodiment of the present disclosure. The following specific operations are presented, namely steps 600 to 650:
600 - activating corridor following assist and deactivating electronic brake assist,
610 - acquiring sensor data, including data at least from camera, radar and GPS sensors,
620 - based on the acquired sensor data, searching for at least one row of trees, and for an afferent corridor bordering the row of trees,
630 - if at least one row of trees and the corridor is detected, proceeding to activate specific actuator, namely a sprayer, and further generating specific commands, namely:
   6310 apply fertilizer on each tree in the row,
   6320 move on the corridor from one tree to a next tree in the row,
   6330 repeat applying and moving on until no tree in row is detected anymore,
640 proceeding to search further for tree row(s),
650 - if no tree row is detected, deactivate the sprayer, stop.

Also in this case, detecting a row of trees to be sprayed may be done by using a camera sensor and known image processing algorithm(s) able to recognize a tree and/or trees in a row in images acquired by the camera sensor; the tree position may be provided via GPS, and acquired/transmitted to the host equipment; radar or ultrasonic sensors may also detect the position of the trees on terrain, including the lateral distance between parallel rows of trees (corridor width). Operational data concerning the level of spraying liquid may also be acquired, in addition, by means of a liquid level sensor provided on sprayer.

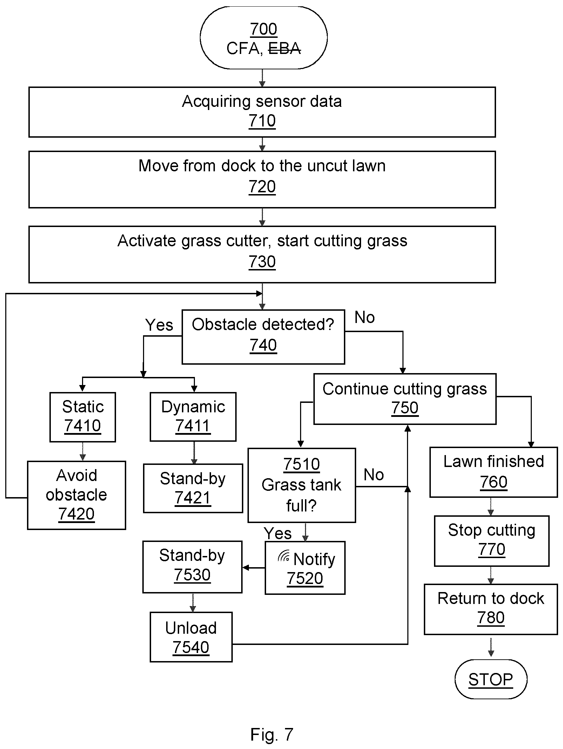

FIG. 7 is a flowchart that describes the mowing assist function, according to an embodiment of the present disclosure. The following specific operations 700 to 780 comprises:
700 - activating corridor following assist and deactivating electronic brake assist,
710 - acquiring sensor data, including data at least from camera, radar and GPS sensors,
720 - based on the acquired sensor data, move from dock to an uncut lawn area,
730 - proceeding to activate a specific actuator, namely a grass cutter, and further generating specific commands, namely start cutting grass,
740 - if an obstacle is detected, determine the type of obstacle, meaning static or dynamic obstacle,
7410 - in case the obstacle is static, 7411 proceed to avoid it,
7420 - in case the obstacle is dynamic, 7421 proceed to stand-by,
   - if no obstacle is detected, 750 continue cutting 7510 until a grass tank is fully loaded, 7520 send notification, 7530 proceed to stand-by, 7540 unload the grass tank,
760 - continue cutting until the lawn area is finished, 770 deactivate the grass cutter/stop cutting, 780 return to dock, stop.

The position and orientation of an uncut lawn may be provided via map or may be recognized by image-based algorithms capable to analyze texture and color, and based on this analysis, to decide there is an uncut lawn region; another possibility is to use markings delimiting the uncut lawn area, these markings being easily detected by radar or ultrasonic sensors. Further on, detecting a static or a dynamic obstacle presence, size and orientation may be also possible based on image or radar data analysis. The operation of returning to dock is similar in essence with an automated parking procedure and may be predefined having as input data a start position (basically the position of the host equipment when the mowing task is finished) and an end position (basically the position of a dock where the host equipment is parked). The automated driving unit 110 may be programmed to include also a specific algorithm able not only to design a trajectory for host equipment at its return to dock, but also to optimize this trajectory.

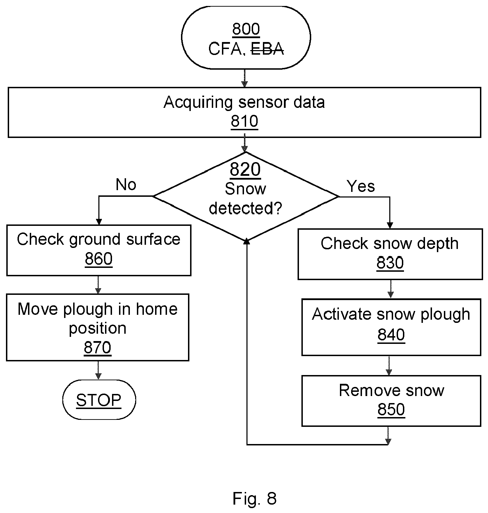

FIG. 8 is a flowchart that describes the plowing assist function, according to an embodiment of the present disclosure. The following specific operations are provided, as a sequence of steps 800 - 870:
800 - activating corridor following assist and deactivating electronic brake assist,
810 - acquiring sensor data, including at least data from camera, radar and GPS sensors,
820 - based on the acquired sensor data, search for snow-covered area in the surroundings,
830 - if one snow-covered area is detected, check snow depth,
840 proceed to activate a specific actuator, namely a snow plough, and further generating specific commands, namely:
850 remove snow until no snow-covered area is detected anymore,
860 if no snow-covered area is detected, check the ground surface,
870 move plough in home position, stop.

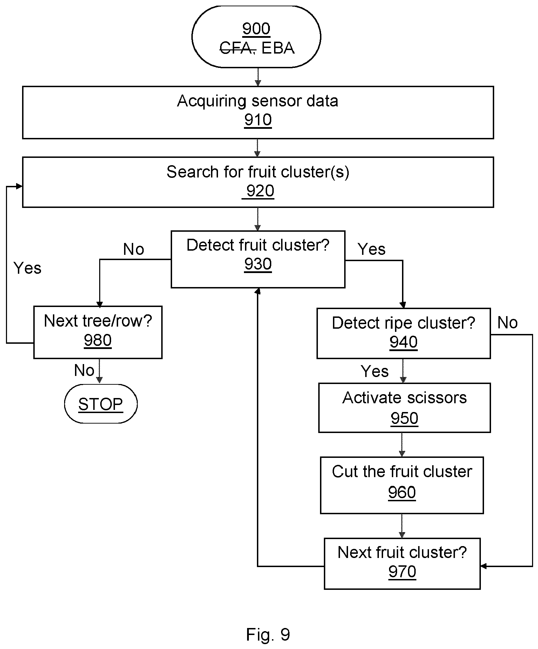

FIG. 9 is a flowchart that describes the harvesting assist function, according to an embodiment of the present disclosure. The following specific sub-operations are provided at steps 900 to 980:
900 - deactivating corridor following assist and activating electronic brake assist,
910 - acquiring sensor data, including data at least from camera, radar and GPS sensors,
920 - based on the acquired sensor data, search to detect fruit cluster(s),
930 - if a fruit cluster is detected,
940 proceed to detect if there is a ripe fruit cluster,
950 - if yes, activate a specific actuator, namely an arm provided with scissors, activate the scissors, and further generating specific commands, 960 namely cut the fruit cluster,
970 - if not, move to the next fruit cluster, repeat until no ripe fruit cluster is detected anymore,
980 - move to next fruit tree, repeat until no fruit cluster is detected anymore, stop.

Different techniques for ripe fruit detection are already known, mainly by means of AI-based image processing algorithms, employing neural networks, edge detection, color segmentation, k-means clustering etc.

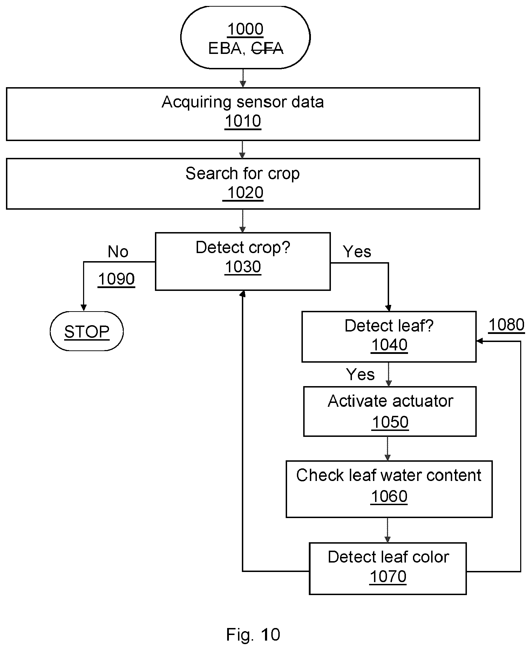

FIG. 10 is a flowchart that describes the crop health assist function, according to an embodiment of the present disclosure. The following specific operations are provided at steps 1000 to 1050:
1000 - deactivating corridor following assist and activating electronic brake assist,
1010 - acquiring sensor data, including data at least from camera, radar and GPS sensors,
1020 - based on the acquired sensor data, search to detect crop,
1030 - if no crop is detected, examine the nearest area,
1040 - if crop is detected, proceed to detect a leaf of the detected crop,
1050 - if a leaf detected, activate a specific actuator, namely an arm provided with a porometer, and further generating specific commands, namely 1060 move arm to the leaf, activate the porometer, check leaf water content,
1070 - detect leaf color,
1080 - repeat a predetermined number of times, 1090 until stop.

Besides using porometer sensors to determine water content of a leaf, also machine vision-based algorithms may be used; such algorithms are already known and used in agriculture as non-invasive techniques to determine health status of a crop.

### List of references

10 Multi-functional equipment
11 Mobile platform
12 Power source unit
13 Wheels
14 Traction control unit
15 Braking system
16 Steering system
17 Sensors
18 Arm carriage system
19 Specific actuators
20 Implement hitch system
21 User interface
22 Wireless communication means
23 User device
100 Automated control unit
110 Automated driving control unit
120 Implement control unit
300 - 340 - steps of automated control method
400 to 450 - operations of tree planting assist TPA
500 to 560 - operations of pruning assist PA
600 to 650 - operations of spraying assist SA
700 to 780 - operations of mowing assist MA
800 to 870 - operations of snow plowing assist SPA
900 to 980 - operations of harvesting assist HA
1000 to 1090 - operations of crop health assist CHA
1200 non-transitory computer readable medium
1210 memory
TPA Tree Planting Assist
PA Pruning Assist
SA Spraying Assist
MA Mowing Assist
PWA Plowing Assist
HA Harvesting Assist
CHA Crop Health Assist
CFA Corridor Following Assist
EBA Electronic Braking Assist
SAf - Specific Assisting Functions
GVf - Generic Vehicular Functions

## Claims

1. Automated control system for a multi-functional equipment, **characterized by** that the control system comprises:
an automated driving control unit configured to receive instructions to execute a task comprising one or more operations, and to activate or deactivate generic vehicular functions,
and
an implement control unit configured to receive instructions to activate or deactivate specific assisting functions that enable the received task execution,
wherein the automated driving control unit sends instructions to and receives instructions from the implement control unit to activates or deactivates one or
another of the generic vehicular functions in direct dependency on one or another activated specific functions.

2. Automated control system according to claim 1, **characterized by** that the generic vehicular functions include electronic brake assist and corridor following assist.

3. Automated control system according to claim 1, **characterized by** that the specific agricultural functions include tree planting assist, pruning assist, spraying assist, mowing assist, plowing assist, harvesting assist and crop health assist.

4. Automated control system according to claims 1-3, **characterized by** that, when tree planting assist is activated, the electronic brake assist is activated, and the corridor following assist is deactivated.

5. Automated control system according to claims 1-3, **characterized by** that, when pruning assist is activated, the electronic brake assist is activated, and the corridor following assist is deactivated.

6. Automated control system according to claims 1 - 3, **characterized by** that, when spraying assist is activated, the electronic brake assist is deactivated, and the corridor following assist is activated.

7. Automated control system according to claims 1-3, **characterized by** that, when mowing assist is activated, the electronic brake assist is deactivated, and the corridor following assist is activated.

8. Automated control system according to claims 1-3, **characterized by** that, when plowing assist is activated, the electronic brake assist is deactivated, and the corridor following assist is activated.

9. Automated control system according to claims 1-3, **characterized by** that, when harvesting assist is activated, the electronic brake assist is activated, and the corridor following assist is deactivated.

10. Automated control system according to claims 1-3, **characterized by** that, when crop health assist is activated, the electronic brake assist is activated, and the corridor following assist is deactivated.

11. Automated control system according to preceding claims, **characterized by** that the implement control unit enables specific actuators according to the activated specific assisting functions.

12. An automated control method for operating a multi-function equipment by means of an automated control system, wherein the automated control system receives instructions to perform a task assisted by a plurality of specific assisting functions, the automated method comprising:
activating, depending on the received task to be performed, a specific assisting function,
activating or deactivating generic vehicular functions, depending on the activated specific assisting function,
activating or deactivating, by the automated control system, a plurality of units or
actuators able to perform generic vehicular functions or specific assisting functions, respectively,
generating operational commands in accordance with the activated generic vehicular and specific functions, respectively,
regularly checking execution status of the task, notifying unusual events and
notifying the task being performed.

13. The automated method of claim 12, **characterized by** that the plurality of specific assisting functions include tree planting assist, pruning assist, spraying assist, mowing assist, plowing assist, harvesting assist, and each assisting function comprise a sequence of specific sub-operations.

14. The automated method of claims 12 - 13, **characterized by** that the tree planting assist function comprises:
(400) - deactivating corridor following assist and activating electronic brake assist,
(410) - acquiring sensor data, including data from camera, radar, ultrasonic and/or GPS sensors,
(420) - based on the acquired data, searching for at least one tree planting marking, - if one tree planting marking is detected, 430 proceeding to activate specific actuators, namely a drill and a planting arm, and further generating specific commands, namely: (4310) moving the drill to the detected marking, (4320) digging a hole, (4330) planting the tree in the hole by means of the planting arm, (4340) moving the planting arm in home position,
(440) proceeding to search further for tree planting marking,
(450) if no tree planting marking detected, stop.

15. The automated method of claims 12 - 13, **characterized by** that the pruning assist function comprises:
(500) deactivating corridor following assist and activating electronic brake assist,
(510) acquiring sensor data, including data from camera, radar, ultrasonic and/or GPS sensors,
(520) based on the acquired sensor data, searching for at least one tree marked to be pruned,
(530) searching the marked tree to detect branches to be pruned,
(540) if at least one branch to be pruned is detected, proceeding to activate specific actuators, namely a pruning arm and scissors, and further generating specific commands, namely:
(5410) moving the arm to the detected branch, (5420) activating the scissors,
(5430) pruning the branch, (5440) repeat until no branch to be pruned is detected anymore, (5450) move the arm in home position,
(550) proceeding to search further for marked trees,
(560) if no marked tree is detected, stop.

16. The automated method of claims 12 - 13, **characterized by** that the spraying assist (SA) function comprises:
(600) activating corridor following assist and deactivating electronic brake assist,
(610) acquiring sensor data, including data at least from camera, radar and GPS sensors,
(620) based on the acquired sensor data, searching for at least one row of trees, and for an afferent corridor bordering the row of trees,
(630) if at least one row of trees and the corridor is detected, proceeding to activate specific actuator, namely a sprayer, and further generating specific commands, namely: (6310) apply fertilizer on each tree in the row, (6320) move on the corridor from one tree to a next tree in the row, (6330) repeat applying and moving on until no tree in row is detected anymore,
(640) proceeding to search further for tree row(s),
if no tree row is detected, (650) deactivate the sprayer, stop.

17. The automated method of claims 12 - 13, **characterized by** that the mowing assist (MA) function comprises: (700) activating corridor following assist and deactivating electronic brake assist,
(710) acquiring sensor data, including data at least from camera, radar and GPS sensors,
(720) based on the acquired sensor data, move from dock to an uncut lawn area,
(730) proceeding to activate a specific actuator, namely a grass cutter, and further generating specific commands, namely start cutting grass,
(740) if an obstacle is detected, determine the type of obstacle, meaning static or dynamic obstacle,
(7410) in case the obstacle is static, (7411) proceed to avoid it,
(7420) in case the obstacle is dynamic, (7421) proceed to stand-by,
if no obstacle is detected, (750) continue cutting (7510) until a grass tank is fully loaded, (7520) send notification, (7530) proceed to stand-by, (7540) unload the grass tank,
(760) continue cutting until the lawn area is finished, (770) deactivate the grass cutter/stop cutting, (780) return to dock, stop.

18. The automated method of claims 12 - 13, **characterized by** that the snow plowing assist function comprises:
(800) activating corridor following assist and deactivating electronic brake assist,
(810) acquiring sensor data, including at least data from camera, radar and GPS sensors,
(820) based on the acquired sensor data, search for snow-covered area in the surroundings,
(830) if one snow-covered area is detected, check snow depth,
(840) proceed to activate a specific actuator, namely a snow plough, and further generating specific commands, namely: (850) remove snow until no snow-covered area is detected anymore,
if no snow-covered area is detected, (860) check the ground surface,
(870) move plough in home position, stop.

19. The automated method of claims 12 - 13, **characterized by** that the harvesting assist function comprises:
(900) deactivating corridor following assist and activating electronic brake assist,
(910) acquiring sensor data, including data at least from camera, radar and GPS sensors,
(920) based on the acquired sensor data, search to detect fruit cluster(s),
(930) if a fruit cluster is detected,
(940) proceed to detect if there is a ripe fruit cluster,
(950) if yes, activate a specific actuator, namely an arm provided with scissors, activate the scissors, and further generating specific commands, (960) namely cut the fruit cluster,
(970) if not, move to the next fruit cluster, repeat until no ripe fruit cluster is detected anymore,
(980) move to next fruit tree, repeat until no fruit cluster is detected anymore, stop.

20. The automated method of claims 12 - 13, **characterized by** that the crop health assist function comprises:
(1000) deactivating corridor following assist and activating electronic brake assist,
(1010) acquiring sensor data, including data at least from camera, radar and GPS sensors,
(1020) based on the acquired sensor data, search to detect crop,
(1030) if no crop is detected, examine the nearest area,
(1040) if crop is detected, proceed to detect a leaf of the detected crop,
(1050) if a leaf detected, activate a specific actuator, namely an arm provided with a porometer, and further generating specific commands, namely (1060) move arm to the leaf, activate the porometer, check leaf water content,
(1070) detect leaf color,
(1080) repeat a predetermined number of times, (1090) until stop.

21. The automated method of preceding claims 12-20, **characterized by** that data acquired from the plurality of sensors (17) comprise sensor data, location information and operational data.

22. A non-transitory computer readable storage medium comprises:
at least one memory that stores instructions that causes one or more processors of an automated control system to execute the method according to any of claims 12-20.

23. A multi-functional equipment (10), comprising:
a mobile platform (11) provided with a power source unit (12),
a plurality of wheels (13) supporting the mobile platform (11),
a traction control unit (14),
a braking system (15), and a steering system (16), each operatively coupled to one or more of the wheels,
a plurality of sensors (17) capable to collect data from surroundings of the multi-functional equipment, to process the collected data and to provide sensor data,
an arm carriage system (18),
an implement hitch system (20),
a plurality of inter-changeable actuators (19), able to be secured onto the arm carriage system (18) or onto the front or rear implement hitch (20), and
a user interface (21),
wherein the multi-functional equipment further comprises
an automated control system (100) according to claim 1, in communication with the traction control unit (14), the braking system (15), the steering system (16), the implement hitch system (20) and the arm carriage system (18),
wherein the automated control system is configurate to generate operational commands according to the automated control method of claim 12, the operational commands being responsive to predefined task(s) provided by an operator via the user interface (21).
